(19) Europäisches Patentamt
European Patent Office
Office européen des brevets

(11) EP 3 630 859 B1

(12) # EUROPÄISCHE PATENTSCHRIFT

(45) Veröffentlichungstag und Bekanntmachung des Hinweises auf die Patenterteilung:
**23.06.2021 Patentblatt 2021/25**

(21) Anmeldenummer: **18725868.6**

(22) Anmeldetag: **29.05.2018**

(51) Int Cl.:
***C08G 18/48*** (2006.01) ***C08G 18/76*** (2006.01)
***C08G 18/34*** (2006.01) ***C08G 18/44*** (2006.01)

(86) Internationale Anmeldenummer:
**PCT/EP2018/063985**

(87) Internationale Veröffentlichungsnummer:
**WO 2018/219893 (06.12.2018 Gazette 2018/49)**

(54) **POLYURETHANSCHAUMSTOFFE BASIEREND AUF POLYETHERCARBONATPOLYOLEN**
POLYURETHANE FOAMS BASED ON POLYETHER CARBONATE POLYOLS
MOUSSES DE POLYURÉTHANE À BASE DE POLYÉTHER CARBONATES POLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2017 EP 17174108**

(43) Veröffentlichungstag der Anmeldung:
**08.04.2020 Patentblatt 2020/15**

(73) Patentinhaber: **Covestro Intellectual Property GmbH & Co. KG**
**51373 Leverkusen (DE)**

(72) Erfinder:
- **HILKEN, Persefoni**
  **50937 Köln (DE)**
- **LINDNER, Stefan**
  **42857 Remscheid (DE)**
- **NEFZGER, Hartmut**
  **50259 Pulheim (DE)**
- **ALBACH, Rolf**
  **51061 K ln (DE)**
- **WEHLAU, Antje**
  **51377 Leverkusen (DE)**

(74) Vertreter: **Levpat**
**c/o Covestro AG**
**Gebäude 4825**
**51365 Leverkusen (DE)**

(56) Entgegenhaltungen:
**WO-A1-2017/085201**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 630 859 B1

## Beschreibung

Die vorliegende Erfindung betrifft ein Verfahren zur Herstellung von Polyurethanschaumstoffen, vorzugsweise von Polyurethanweichschaumstoffen, durch Reaktion einer Isocyanat-Komponente mit einer gegenüber Isocyanaten reaktiven Komponente, die mindestens ein Polyethercarbonatpolyol umfasst, und wobei die Umsetzung in Gegenwart einer Komponente K erfolgt, die im weiteren näher beschrieben wird. Die Erfindung betrifft weiterhin durch das erfindungsgemäße Verfahren hergestellte Polyurethanschaumstoffe und deren Verwendung.

Im Rahmen einer umweltfreundlichen Ausrichtung von Produktionsprozessen ist es generell wünschenswert, $CO_2$-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im Folgenden auch als cPC bezeichnet, oder für R = H Ethylencarbonat, im Folgenden auch als cEC bezeichnet).

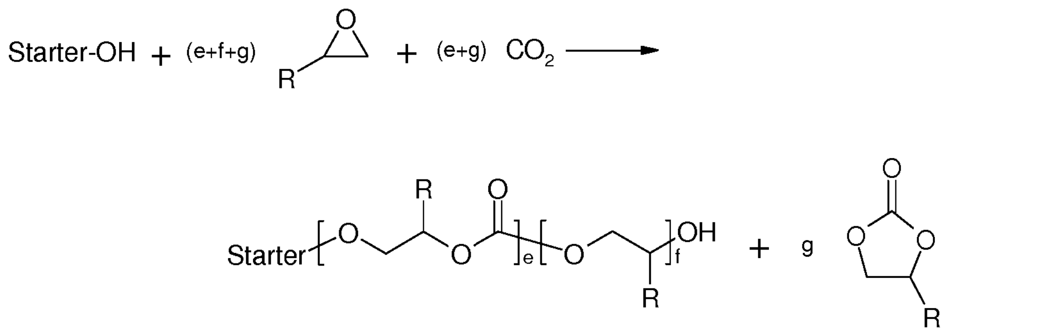

(I)

Die Herstellung von Polyurethanschaumstoffen auf Basis von Polyethercarbonatpolyolen und Isocyanaten ist bekannt (z.B. WO 2012/130760 A1, EP-A 0 222 453). Es wurde festgestellt, dass bei der Verwendung von Polyethercarbonatpolyolen zur Herstellung von Polyurethanschaumstoffen die resultierenden Produkte cyclisches Propylencarbonat enthalten, welches beispielsweise durch Emissionsmessungen am Polyurethanweichschaumstoff nachgewiesen werden kann.

In dem Patent mit der Anmeldenummer EP2016/079817 wird beschrieben, dass durch den Einsatz von Estern von ein- oder mehrbasigen Carbonsäuren, deren (erste) Dissoziation einen pKs-Wert von 0,5 bis 4,0 aufweist, als Additive beim Verschäumen von Polyurethanschäumen eine Verringerung der Emission von cyclischem Propylencarbonat beobachtet werden kann.

Die Aufgabe der vorliegenden Erfindung bestand darin, ein Verfahren zur Herstellung von Polyurethanschaumstoffen bereitzustellen, welches zu Polyurethanschaumstoffen mit einer reduzierten Emission von cyclischem Propylencarbonat führt.

Überraschenderweise wurde diese Aufgabe gelöst durch ein Verfahren zur Herstellung von Polyurethanschaumstoffen, vorzugsweise von Polyurethanweichschaumstoffen, durch Umsetzung von

Komponente A enthaltend Polyethercarbonatpolyol mit einer Hydroxylzahl gemäß DIN 53240-1 (Juni 2013) von ≥ 20 mg KOH/g bis ≤ 120 mg KOH/g (Komponente A1) sowie gegebenenfalls eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-% (Komponente A2), wobei die Polyetherpolyole A2 frei von Carbonateinheiten sind,

B gegebenenfalls

B1) Katalysatoren und/oder,

B2) Hilfs- und Zusatzstoffen

C Wasser und/oder physikalischen Treibmitteln,
mit
D Di und/oder Polyisocyanaten,
wobei die Herstellung bei einer Kennzahl von ≥ 90 bis ≤ 120 erfolgt,
dadurch gekennzeichnet, dass die Herstellung in Gegenwart einer Komponente K erfolgt, wobei Komponente K ausgewählt ist aus einer oder mehreren Verbindungen der Gruppe bestehend aus
K1 Dicarbonylverbindungen gemäß der Formel (II), ausgenommen Dicarbonylverbindungen, die Ester von ein- oder mehrbasigen Carbonsäuren sind,

$$(R^2)_x\text{-}(C{=}O)\text{-}(R^1)_n\text{-}(C{=}O)\text{-}(R^3)_y \qquad (II)$$

wobei

n eine ganze Zahl ≥ 0 bis ≤ 6, bevorzugt ≥ 1 bis ≤ 4, besonders bevorzugt ist n = 1, 2 oder 4, höchst bevorzugt ist n = 1 oder 2,
x,y gleich oder verschieden sein können und für eine ganze Zahl ≥ 1 bis ≤ 3, bevorzugt 1 oder 2 stehen,
$R^1$ gleich oder verschieden sein kann und für substituiertes oder unsubstituiertes C1-C22-Alkylen, substituiertes oder unsubstituiertes C1-C22-Alkenylen, substituiertes oder unsubstituiertes C6-C18-Arylen, Heteroarylen, Amine oder Amide steht oder Bestandteil eines 4 bis 7 gliedrigen Rings oder polycyclischen Systems ist,
$R^2$, $R^3$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Amin, Amid, Hydroxyl oder Nitril stehen oder Bestandteile eines 4 bis 7 gliedrigen Rings oder polycyclischen Systems sind,

in einer bevorzugten Ausführungsform sind K1 Dicarbonylverbindungen gemäß der Formel (II), ausgenommen Dicarbonylverbindungen, die Ester von ein- oder mehrbasigen Carbonsäuren sind, wobei

n für 1, 2 oder 4, bevorzugt 1 oder 2 steht,
x,y gleich oder verschieden sein können und für 1 oder 2 stehen,
$R^1$ gleich oder verschieden sein kann und für substituiertes oder unsubstituiertes C1-C22-Alkylen, substituiertes oder unsubstituiertes C6-C18-Arylen oder für Heteroarylen steht,
$R^2$, $R^3$ gleich oder verschieden sein können und für substituiertes oder unsubstituiertes C1-C22-Alkyl, Amin, Amid oder Hydroxyl stehen,

K2 β-Ketonitrile gemäß der Formel (III),

$$(R^5)_w\text{-}(C{=}O)\text{-}C(H)(R^4)(\text{-}CN) \qquad (III)$$

wobei

w eine ganze Zahl ≥ 1 bis ≤ 3, bevorzugt 1 oder 2 ist,
$R^4$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Amin oder Amid steht oder Bestandteil eines 4 bis 7 gliedrigen Rings oder polycyclischen Systems ist,
$R^5$ gleich oder verschieden sein kann und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteil eines 4 bis 7 gliedrigen Rings oder polycyclischen Systems ist,

in einer bevorzugten Ausführungsform sind K2 β-Ketonitrile gemäß der Formel (III), wobei

w für 1 oder 2 steht,
$R^4$ für H steht,
$R^5$ gleich oder verschieden sein kann und für Amin, Amid oder Acyl steht,

K3 Dicarbonylverbindungen mit der Formel (IV),

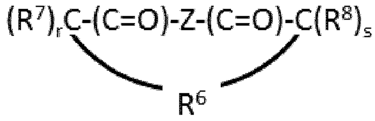

(IV)

wobei

Z für -O-, $-N(R^9)-$ oder C1-C6-Alkylen steht,

r,s für 1 oder 2 stehen, wobei r und s für 2 stehen, wenn $R^6$ für eine Einfachbindung, $-C(R^9)_2-$, -O-oder $-N(R^9)-$ steht, r für 1 und s für 2 stehen, wenn $R^6$ für =C(H)- steht, r für 2 und s für 1 stehen, wenn $R^6$ für =C(H)- steht, r und s für 1 stehen, wenn $R^6$ für eine Doppelbindung steht,

$R^6$ für eine Einfachbindung, Doppelbindung, $-C(R^9)_2-$, =C(H)-, -O- oder $-N(R^9)-$ steht,

$R^7$, $R^8$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteile eines 4 bis 7 gliedrigen Rings oder polycyclischen Systems sind,

$R^9$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteil eines 4 bis 7 gliedrigen Rings oder polycyclischen Systems ist,

in einer bevorzugten Ausführungsform sind K3 Dicarbonylverbindungen mit der Formel (IV), wobei

Z für -O- oder $-N(R^9)-$ steht,

r,s für 1 oder 2 stehen, wobei r und s für 2 stehen, wenn $R^6$ für eine Einfachbindung oder $-C(R^9)_2$-steht,
r für 1 und s für 2 stehen, wenn $R^6$ für =C(H)- steht,
r für 2 und s für 1 stehen, wenn $R^6$ für =C(H)- steht,
r und s für 1 stehen, wenn $R^6$ für eine Doppelbindung steht,

$R^6$ für eine Einfachbindung, Doppelbindung, $-C(R^9)_2-$ oder =C(H)- steht,

$R^7$, $R^8$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, oder Heteroaryl stehen oder Bestandteile eines 4 bis 7 gliedrigen Rings oder polycyclischen Systems sind,

$R^9$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl oder Hydroxyl steht,

K4 Hydroxycarbonsäuren, bevorzugt $\alpha$-Hydroxy-Carbonsäuren und/oder $\beta$-Hydroxy-Carbonsäuren, besonders bevorzugt $\alpha$-Hydroxybenzoesäure, Äpfelsäure oder Weinsäure,

K5 Carbonsäuresalzen, also Verbindungen aus Carboxylat-Anion und Kation, wobei das Kation $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ oder eine auf Ammonium basierende Verbindung $N(H)_o(R^{10})_p$ ist, wobei o und p eine ganze Zahl von 0 bis 4 sind, o + p = 4 ist und wobei $R^{10}$ für substituiertes oder unsubstituiertes C1-C22-Alkyl, substituiertes oder unsubstituiertes C1-C22-Alkenyl, substituiertes oder unsubstituiertes C6-C18-Aryl steht, bevorzugt ist das Kation eine auf Ammonium basierende Verbindung $N(H)_o(R^{10})_p$ wobei o, p, $R^{10}$ die zuvor genannte Bedeutung haben, besonders bevorzugt ist das Kation ausgewählt aus einer oder mehreren Ammonium basierenden Verbindungen der Gruppe bestehend aus $NH_4^+$, $(NR^{10}_4)^+$, $(NR^{10}_3H)^+$, wobei $R^{10}$ die zuvor genannte Bedeutung hat, und wobei Komponente K in einer Menge von $\geq$ 0,05 bis $\leq$ 10,0 Gew.-Teile, bevorzugt $\geq$ 0,5 bis $\leq$ 6,0 Gew.-Teile, besonders bevorzugt $\geq$ 1,0 bis $\leq$ 5,0 Gew.-Teile eingesetzt wird, wobei sich alle Gewichtsteilangaben der Komponente K auf die Summe der Gewichtsteile der Komponenten A1 + A2 = 100 Gewichtsteile beziehen.

Bevorzugter Gegenstand der Erfindung ist ein Verfahren zur Herstellung von Polyurethanschaumstoffen, vorzugsweise von Polyurethanweichschaumstoffen, durch Umsetzung von

A1 $\geq$ 40 bis $\leq$ 100 Gew.-Teile, bevorzugt $\geq$ 60 bis $\leq$ 100 Gew.-Teile, besonders bevorzugt $\geq$ 80 bis $\leq$ 100 Gew.-Teile eines oder mehrerer Polyethercarbonatpolyole mit einer Hydroxylzahl gemäß DIN 53240-1 (Juni 2013) von $\geq$ 20 mg KOH/g bis $\leq$ 120 mg KOH/g,

A2 $\leq$ 60 bis $\geq$ 0 Gew.-Teile, bevorzugt $\leq$ 40 bis $\geq$ 0 Gew.-Teile, besonders bevorzugt $\leq$ 20 bis $\geq$ 0 Gew.-Teile eines oder mehrerer Polyetherpolyole mit einer Hydroxylzahl gemäß DIN 53240-1 (Juni 2013) von $\geq$ 20 mg KOH/g bis $\leq$

250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 0 Gew.-Teilen, bezogen auf die Summe der Gew.-Teile der Komponenten A1 und A2, eines oder mehrerer Polyetherpolyole mit einer Hydroxylzahl gemäß DIN 53240-1 (Juni 2013) ≥ 20 mg KOH/g bis ≤ 250 mg KOH/g, und einem Gehalt an Ethylenoxid von ≥ 60 Gew.-%, wobei die Polyetherpolyole A3 frei von Carbonateinheiten sind,
A4 ≤ 40 bis ≥ 0 Gew.-Teilen, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,
B gegebenenfalls

B1) Katalysatoren und/oder
B2) Hilfs- und Zusatzstoffen

C Wasser und/oder physikalischen Treibmitteln,
mit
D Di und/oder Polyisocyanaten,
wobei die Herstellung bei einer Kennzahl von ≥ 90 bis ≤ 120 erfolgt,
wobei alle Gewichtsteilangaben der Komponenten A1, A2, A3, A4, A5 so normiert sind, dass die Summe der Gewichtsteile A1 + A2 in der Zusammensetzung 100 ergibt,
dadurch gekennzeichnet, dass die Herstellung in Gegenwart von Komponente K erfolgt.

Die Komponenten A1 bis A5 beziehen sich jeweils auf "eine oder mehrere" der genannten Verbindungen. Bei Verwendung mehrerer Verbindungen einer Komponente entspricht die Mengenangabe der Summe der Gewichtsteile der Verbindungen.

In einer besonders bevorzugten Ausführungsform enthält Komponente A

A1 ≥ 65 bis ≤ 75 Gew.-Teile, höchst bevorzugt ≥ 68 bis ≤ 72 Gew.-Teile eines oder mehrerer Polyethercarbonatpolyole mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 15 bis 25 Gew.-%, und
A2 ≤ 35 bis ≥ 25 Gew.-Teile, höchst bevorzugt ≤ 32 bis ≥ 28 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
wobei die Komponente A vorzugsweise frei ist von Komponente A3 und/oder A4.

In einer anderen Ausführungsform umfasst Komponente A

A1 ≥ 65 bis ≤ 75 Gew.-Teile, bevorzugt ≥ 68 bis ≤ 72 Gew.-Teile eines oder mehrerer Polyethercarbonatpolyole mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 15 bis 25 Gew.-%, und
A2 ≤ 35 bis ≥ 25 Gew.-Teile, bevorzugt ≤ 32 bis ≥ 28 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 2 Gew.-Teile, bevorzugt ≤ 10 bis ≥ 2 Gew.-Teile, bezogen auf die Summe der Gew.-Teile der Komponenten A1 und A2, eines oder mehrerer Polyetherpolyole mit einer Hydroxylzahl gemäß DIN 53240-1 (Juni 2013) ≥ 20 mg KOH/g bis ≤ 250 mg KOH/g, und einem Gehalt an Ethylenoxid von ≥ 60 Gew.-%, wobei die Polyetherpolyole A3 frei von Carbonateinheiten sind,
wobei die Komponente A vorzugsweise frei ist von Komponente A4.

In einer weiteren Ausführungsform umfasst Komponente A

A1 ≥ 40 bis ≤ 100 Gew.-Teile, bevorzugt ≥ 60 bis ≤ 100 Gew.-Teile, besonders bevorzugt ≥ 80 bis ≤ 100 Gew.-Teile, höchst bevorzugt ≥ 65 bis ≤ 75 Gew.-Teile eines oder mehrerer Polyethercarbonatpolyole mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 15 bis 25 Gew.-%, und
A2 ≤ 60 bis ≥ 0 Gew.-Teile, bevorzugt ≤ 40 bis ≥ 0 Gew.-Teile, besonders bevorzugt ≤ 20 bis ≥ 0 Gew.-Teile, höchst bevorzugt ≤ 35 bis ≥ 25 Gew.-Teile eines oder mehrerer Polyetherpolyole mit einer Hydroxylzahl gemäß DIN 53240-1

(Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A4 ≤ 40 bis ≥ 0,01 Gew.-Teile, bevorzugt ≤ 20 bis ≥ 0,01 Gew.-Teile, besonders bevorzugt ≤ 20 bis ≥ 1 Gew.-Teile, höchst bevorzugt ≤ 20 bis ≥ 2 Gew.-Teile, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,
wobei die Komponente A vorzugsweise frei ist von Komponente A3.
Dabei sind die angegebenen Bereiche und Vorzugsbereiche der Komponenten A1, A2, A4 und A5 miteinander frei kombinierbar.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240-1 (Juni 2013) von ≥ 20 mg KOH/g bis ≤ 120 mg KOH/g, vorzugsweise von ≥ 20 mg KOH/g bis ≤ 100 mg KOH/g, besonders bevorzugt von ≥ 25 mg KOH/g bis ≤ 90 mg KOH/g, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist. Bevorzugt umfasst Komponente A1 ein Polyethercarbonatpolyol, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 bis ≤ 4, besonders bevorzugt von ≥ 2 bis ≤ 3. Unter "H-funktionell" wird im Sinne der Erfindung eine Starterverbindung verstanden, die gegenüber Alkoxylierung aktive H-Atome aufweist.
Vorzugsweise erfolgt die Copolymerisation von Kohlendioxid und einem oder mehreren Alkylenoxiden in Gegenwart mindestens eines DMC-Katalysators (Doppelmetallcyanid-Katalysators).
Vorzugsweise weisen die erfindungsgemäß eingesetzten Polyethercarbonatpolyole zwischen den Carbonatgruppen auch Ethergruppen auf, was in Formel (V) schematisch dargestellt wird. In dem Schema gemäß Formel (V) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (V) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (V) gezeigte Polyethercarbonatpolyol beschränkt ist. In Bezug auf Formel (V) bedeutet dies, dass das Verhältnis von e/f bevorzugt von 2 : 1 bis 1 : 20, besonders bevorzugt von 1,5 : 1 bis 1 : 10 beträgt.

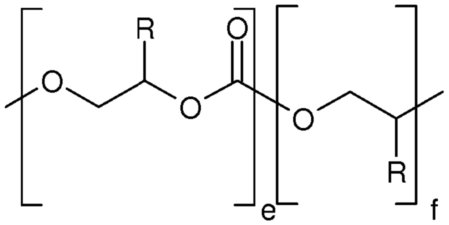

(V)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.
Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit dl: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (VI) berechnet,

$$LC' = \frac{[F(5,1-4,8) - F(4,5)] * 102}{N} * 100\% \qquad \text{(VI)}$$

wobei sich der Wert für N ("Nenner" N) nach Formel (VII) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \qquad \text{(VII)}$$

Dabei gelten folgende Abkürzungen:

F(4,5) = Fläche der Resonanz bei 4,5 ppm für cyclisches Carbonat (entspricht einem H Atom) F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).
Der Gewichtsanteil (in Gew.-%) an cyclischem Carbonat (CC') in der Reaktionsmischung wurde nach Formel (VIII) berechnet,

$$CC' = \frac{F(4,5) * 102}{N} * 100\% \qquad \text{(VIII)}$$

wobei sich der Wert für N nach Formel (VII) berechnet.
Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).
Beispielsweise umfasst die Herstellung von Polyethercarbonatpolyolen gemäß A1, indem:

($\alpha$) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,
($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (β) eingesetzten Alkylenoxide gleich oder verschieden sein können von den bei Schritt (γ) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei ≥ 0 und ≤ 90 Gew.-%, bevorzugt bei ≥ 0 und ≤ 50 Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielsweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (IX),

$$HO\text{-}(CH_2)_x\text{-}OH \qquad (IX)$$

wobei x eine Zahl von 1 bis 20, bevorzugt eine gerade Zahl von 2 bis 20 ist. Beispiele für Alkohole gemäß Formel (IX) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (IX) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine

Funktionalität von ≥ 2 bis ≤ 3.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240-1 (Juni 2013) bestimmt werden.

In einer weiteren Ausführungsform wird ein Polyethercarbonatpolyol A1 eingesetzt, enthaltend Blöcke gemäß Formel (V) wobei das Verhältnis e/f von 2 : 1 bis 1 : 20 beträgt.

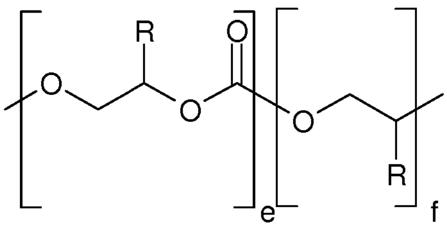

(V)

In einer weiteren Ausführungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240-1 (Juni 2013) von ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um BlockCopolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen einen Gehalt von ≥ 0 bis ≤ 60 Gew.-%, vorzugsweise von ≥ 0 bis ≤ 40 Gew.-%, besonders bevorzugt ≥ 0 bis ≤ 25 Gew.-% an Ethylenoxid auf.

Komponente A3

Die Komponente A3 umfasst Polyetherpolyole mit einer Hydroxylzahl gemäß DIN 53240-1 (Juni 2013) ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole. Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.

PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid.. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminen-modifizierte, vorzugsweise Triethanolamin-modifizierte Polyetherpolyole und/oder Polyethercarbonatpolyole, wobei das Polyether(carbonat)polyol eine Funktionalität von 2,5 bis 4 und eine Hydroxylzahl von ≥ 3 mg KOH/g bis ≤ 112 mg KOH/g (Molekulargewicht 500 bis 18000) aufweist. Vorzugsweise ist das Polyetherpolyol "EOcapped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole

oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B

Als Katalysatoren gemäß der Komponente B1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder
b) Zinn(II)-Salze von Carbonsäuren
eingesetzt.

Es werden insbesondere die Zinn(II)-Salze von Carbonsäuren eingesetzt, wobei die jeweils zugrundeliegende Carbonsäure von 2 bis 24 Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.

In einer bevorzugten Ausführungsform der Erfindung wird mindestens ein Zinn(II)-Salz der Formel (X)

$$Sn(C_xH_{2x+1}COO)_2 \qquad (X)$$

eingesetzt, wobei x eine ganze Zahl von 8 bis 24, bevorzugt 10 bis 20, besonders bevorzugt von 12 bis 18 bedeutet. Besonders bevorzugt ist in Formel (X) die Alkylkette $C_xH_{2x+1}$ des Carboxylats eine verzweigte Kohlenstoffkette, d.h. $C_xH_{2x+1}$ ist eine *iso*-Alkylgruppe.

Höchst bevorzugt werden als Zinn(II)-Salze von Carbonsäuren eine oder mehrere Verbindungen ausgewählt aus der Gruppe bestehend aus Zinn(II)-Salz der 2-Butyloctansäure, d.h. Zinn(II)-(2-butyloctoat), Zinn(II)-Salz der Ricinolsäure, d.h. Zinn(II)-ricinoleat und Zinn(II)-Salz der 2-Hexyldecansäure, d.h. Zinn(II)-(2-hexyldecanoat) eingesetzt.

In einer anderen bevorzugten Ausführungsform der Erfindung wird als Komponente B1

B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und
B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf,
eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von ≥ 0,05 bis ≤ 1,5 Gew.-Teilen, bevorzugt von ≥ 0,1 bis ≤ 0,5 Gew.-Teilen, besonders bevorzugt von ≥ 0,25 bis ≤ 0,35 Gew.-Teilen, bezogen auf die Summe der Gew.-Teile der Komponenten A1 bis A2, eingesetzt.

Die Komponente B1.2 wird in Mengen von ≥ 0,03 bis ≤ 1,5 Gew.-Teilen, bevorzugt ≥ 0,03 bis ≤ 0,5 Gew.-Teilen, besonders bevorzugt von ≥ 0,1 bis ≤ 0,3 Gew.-Teilen, ganz besonders bevorzugt von ≥ 0,2 bis ≤ 0,3 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren.

Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt:

aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Zu den in B1.2 genannten "aminischen Katalysatoren" gehören nicht Harnstoff oder seine Derivate.

Gegenstand der Erfindung ist daher auch ein Verfahren zur Herstellung von Polyurethanschaumstoffen, dadurch gekennzeichnet, dass

Komponente A enthaltend Polyethercarbonatpolyol mit einer Hydroxylzahl gemäß DIN 53240 von ≥ 20 mg KOH/g bis ≤ 120 mg KOH/g (Komponente A1),
im nicht-alkalischen Medium mit
C Wasser und/oder physikalischen Treibmitteln und
D Di und/oder Polyisocyanaten,
umgesetzt wird, wobei die Herstellung bei einer Kennzahl von ≥ 90 bis ≤ 120 erfolgt, dadurch gekennzeichnet, dass die Herstellung in Gegenwart von Komponente K erfolgt.

Das nicht-alkalische Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Daher ist ein bevorzugter Gegenstand der Erfindung ein Verfahren zur Herstellung von Polyurethanschaumstoffen, dadurch gekennzeichnet, dass

A1 ein oder mehrere Polyethercarbonatpolyole mit einer Hydroxylzahl gemäß DIN 53240-1 (Juni 2013) von ≥ 20 mg KOH/g bis ≤ 120 mg KOH/g,
B1 in Gegenwart von Harnstoff und/oder Derivaten des Harnstoffs und in Abwesenheit aminischer Katalysatoren mit
C Wasser und/oder physikalischen Treibmitteln und
D Di und/oder Polyisocyanaten,
im nicht-alkalischen Medium umgesetzt werden, wobei die Herstellung bei einer Kennzahl von ≥ 90 bis ≤ 120 erfolgt, dadurch gekennzeichnet, dass die Herstellung in Gegenwart von Komponente K erfolgt.

Als Komponente B2 werden Hilfs- und Zusatzstoffe eingesetzt, wie

a) oberflächenaktive Zusatzstoffe, wie Emulgatoren und Schaumstabilisatoren insbesondere solche mit niedriger Emission wie beispielsweise Produkte der Tegostab® LF2-Serie
b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (verschieden von Komponente K3; wie beispielsweise Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis

136, beschrieben werden, beispielsweise solche der Formel (XI)

$$Q(NCO)_n, \qquad (XI)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die Isocyanat-Komponente D ein Toluylendiisocyanat-Isomerengemisch aus 55 bis 90 Gew.-% 2,4- und 10 bis 45 Gew.-% 2,6-TDI.

In einer weiteren Ausführungsform des erfindungsgemäßen Verfahrens umfasst die Isocyanat-Komponente D 100 Gew.-% 2,4- Toluylendiisocyanat.

In einer Ausführungsform des erfindungsgemäßen Verfahrens beträgt die Kennzahl ≥ 90 bis ≤ 120. Vorzugsweise liegt die Kennzahl in einem Bereich von ≥ 100 bis ≤ 115, besonders bevorzugt ≥ 102 bis ≤ 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = (\text{Isocyanat-Menge eingesetzt}) : (\text{Isocyanat-Menge berechnet}) \bullet 100 \qquad (XII)$$

Komponente K

Komponente K ist ausgewählt aus einer oder mehrerer Verbindungen der Gruppe bestehend aus den Komponenten K1, K2, K3, K4 und K5, die im Folgenden beschrieben werden.

Komponente K1

Beispiele für Verbindungen die als Komponente K1 eingesetzt werden können sind Bernsteinsäure, Thiophen-2,5-Dicarbonsäure, Malonsäurediamid, Acetoacetamid, N,N-Dimethylacetoacetamid, Acetylaceton, 5,5-Dimethyl-1,3-cyclohexandion, Terephthalsäure, Oxalsäurediamid, Diacetylhydrazin, Adipinsäure, Maleinsäure oder Zitrakonsäure, wobei erfindungsgemäß bevorzugt Malonsäurediamid oder Thiophen-2,5-Dicarbonsäure eingesetzt werden.

Komponente K2

Beispiele für Verbindungen die als Komponente K2 eingesetzt werden können sind Cyanoacetohydrazid, N-Benzyl-2-Cyanoacetamid, Cyanacetamid, 2-Amino-2-Cyanoacetamid, N-tert-Butyl-2-Cyanoacetamid oder Cyanoacetylharnstoff, wobei erfindungsgemäß bevorzugt Cyanacetamid oder Cyanoacetylharnstoff eingesetzt werden.

Komponente K3

Als Komponente K3 können beispielsweise Phthalsäureanhydrid, 1,2,3,6-Tetrahydro-Phthalsäureanhydrid, Dodecenylbernsteinsäureanhydrid, Zitrakonsäureanhydrid, Glutarsäureanhydrid oder N-Hydroxyphthalimid eingesetzt werden, wobei bevorzugt Dodecenylbernsteinsäureanhydrid, N-Hydroxyphthalimid, Glutarsäureanhydrid oder 1,2,3,6-Tetrahydro-Phthalsäureanhydrid, höchst bevorzugt Dodecenylbernsteinsäureanhydrid, 1,2,3,6-Tetrahydro-Phthalsäureanhydrid oder N-Hydroxyphthalimid eingesetzt werden.

Komponente K4

Als Komponente K4 werden bevorzugt $\alpha$-Hydroxycarbonsäuren, $\beta$-Hydroxycarbonsäuren oder substituierte und unsubstituierte Hydroxybenzoesäure, wie z.B. Salicylsäure, Äpfelsäure, Weinsäure, 5-Sulfosalicylsäure, 3-Hydroxybenzoesäure, oder 3-Hydroxypropionsäure, besonders bevorzugt werden Salicylsäure, Äpfelsäure oder Weinsäure eingesetzt.

Komponente K5

Komponente K5 ist ausgewählt aus einer oder mehreren Verbindungen der Carbonsäuresalze. Bevorzugt besteht der anionische Teil des Salzes, also das Carboxlyat-Ion, aus einfach oder mehrfach deprotonierter Carbonsäure. Eingesetzt werden können beispielsweise einfach oder mehrfach deprotonierte Carbonsäuren, insbesondere solche basierend auf Maleinsäure, Malonsäure, Weinsäure, Essigsäure, Benzoesäure, Adipinsäure, Äpfelsäure und/oder Oxalsäure.

Als Komponente K5 eingesetzt werden können beispielsweise Ammoniumtartrat, Natriumacetat, Natriumcyanoacetat, Natriumadipat, Calciumadipat oder Calciumoxalat, bevorzugt Ammoniumtartrat, Natriumcyanoacetat und Natriumadipat, höchst bevorzugt Ammoniumtartrat und/oder Natriumcyanoacetat.

Komponente K kann in einer Menge von $\geq$ 0,05 bis $\leq$ 10,0 Gew.-Teile, bevorzugt $\geq$ 0,5 bis $\leq$ 6,0 Gew.-Teile, besonders bevorzugt von $\geq$ 1,0 bis $\leq$ 5,0 Gew.-Teile eingesetzt werden, wobei sich die Gewichtsteilangaben der Komponente K auf die Summe der Gewichtsteile der Komponenten A1 + A2 = 100 Gewichtsteile beziehen. Es wurde festgestellt, dass eine zu hohe Menge an Komponente K in unerwünschtem Maße die mechanischen Eigenschaften des Weichschaumstoffs gegenüber dem Nullwert (ohne Komponente K) beeinflusst. Auch aus wirtschaftlichen Überlegungen heraus sind höhere Gehalte an Komponente K eher ungünstig. Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

Die erfindungsgemäßen Weichschäume weisen eine Rohdichte gemäß DIN EN ISO 3386-1-98 im Bereich von $\geq$ 16 bis $\leq$ 60 kg/m$^3$, bevorzugt $\geq$ 20 bis $\leq$ 50 kg/m$^3$ auf.

## Beispiele

Messmethoden

Experimentell bestimmte OH-Zahlen (Hydroxylzahl) wurden gemäß der Vorschrift der DIN 53240-1 (Juni 2013) ermittelt.

Emissionsbestimmung - cyclisches Propylencarbonat

Die Quantifizierung des cPC-Gehalts erfolgte mittels $^1$H-NMR-Spektroskopie (Firma Bruker, DPX 400, 400 MHz): ca. 24 h nach Herstellung der Polyurethan-Weichschaumstoffe, wurde eine Probe von 1,2-1,5 g des Polyurethan-Weichschaumstoffs bei 60°C für 7,5 Stunden in Aceton per Soxhlet extrahiert. Der Extrakt wurde unter vermindertem Druck konzentriert und in deuteriertem Chloroform, mit Dimethylterephthalat oder 1,2,4-Trichlorbenzol als internen Standard, aufgenommen. Anschließend wurde der cPC-Gehalt per $^1$H-NMR durch den Vergleich mit dem internen Standard

quantifiziert.

Die vorliegende Erfindung wird anhand der nachfolgenden Beispiele erläutert, ohne jedoch darauf beschränkt zu sein. Es bedeuten:

| | |
|---|---|
| A1-1: | Polyethercarbonatpolyol, Funktionalität 2,8, OH-Zahl 54 mg KOH/g, 14 Gew.-% $CO_2$, hergestellt durch Copolymerisation von Propylenoxid und Kohlendioxid mit Glycerin und Propylenglykol als H-funktionelle Starterverbindungen in Gegenwart eines Doppelmetallcyanid-Katalysators |
| B1-1: | Niax Catalyst A-1, Handelsprodukt der Firma Momentive Performance Materials GmbH, Bis[2-(N,N'-dimethylamino)ethyl]-basiert |
| B1-2: | Desmorapid SO, Zinnkatalysator (Fa. Covestro AG) |
| B2-1: | Tegostab BF 2370, Handelsprodukt der Firma Evonik Industries |
| B2-2: | Niax Silicone L-620, Handelsprodukt der Firma Momentive Performance Materials GmbH |
| C-1: | Wasser |
| D-1: | Desmodur T 80, Mischung von 2,4'-Toluylendiisocyanat und 2,6'-Toluylendiisocyanat im Verhältnis 80/20 (Fa. Covestro AG) |
| K1-1: | Acetoacetamid (Fa. Sigma-Aldrich) |
| Kl-2: | Terephthalsäure (Fa. Sigma-Aldrich) |
| Kl-3: | Adipinsäure (Fa. Sigma-Aldrich) |
| Kl-4: | Malonsäurediamid (Fa. Sigma-Aldrich) |
| K2-1: | Cyanoacetylharnstoff (Fa. abcr GmbH) |
| K2-2: | Cyanacetamid (Fa. abcr GmbH) |
| K3-1: | 1,2,3,6-Tetrahydro-Phthalsäureanhydrid (Fa. Merck KGaA) |
| K3-2: | N-Hydroxyphthalimid (Fa. Sigma-Aldrich) |
| K3-3: | Dodecenylbernsteinsäureanhydrid (Fa. Sigma-Aldrich) |
| K4-1: | Äpfelsäure (Fa. Sigma-Aldrich) |
| K5-1: | Ammoniumtartrat (Fa. Sigma-Aldrich) |
| Fyrol-PNX: | oligomeres Alkylphosphat (Fa. ICL-IP) |

Herstellung von Laborweichschaumstoffen:

Die in der Tabelle 1 beschriebenen Polyurethanweichschaumstoffe wurden in einem diskontinuierlichen Verfahren hergestellt. Die Vermischung der Komponenten erfolgte mittels eines Pendraulik Labormischers vom Typ LM 34.

Die Komponente A1-1 (125 g) wurde in einem 500 mL Pappbecher zusammen mit den Komponenten B1-1, B2-1 und C-1 eingewogen und mit einem Schnellrührer 10 Sekunden lang vorvermischt. Anschließend erfolgte die Zugabe der Komponente B1-2 und ein durchmischen von 10 Sekunden bei gleicher Rührgeschwindigkeit. Zu dieser Mischung wurde schließlich die Komponente D-1 zugegeben, 7 Sekunden gemischt und die Mischung in ein vorbereitetes Papierkästchen mit einem Grundriss von 20 cm x 20 cm x 15 cm überführt.

Die Höhe der Polyurethanweichschaumstoffblöcke betrug ca. 14-15 cm. Der fertige Polyurethanweichschaum wurde im Papierkästchen ca. 20-24 Stunden gelagert, bevor dieser zur Ausprüfung in Probekörper gesägt wurde. Die Stauchhärte und die Rohdichte der Polyurethanweichschaumstoffe wurde gemäß DIN EN ISO 3386-1-98 bestimmt.

Bei der Verwendung einer Komponente K wurde diese zunächst in der Komponente A1-1 vorverrührt, bevor die restlichen Rezepturkomponenten wie oben beschrieben zugegeben wurden.

Herstellung von Laborkistenweichschaumstoffen

Die in Tabelle 2 beschriebenen Polyurethanweichschaumstoffe wurden in einem diskontinuierlichen Verfahren hergestellt. Hierzu wurde in einem 5 L Eimer die Komponente A1-1 (2000 g) zusammen mit den Komponenten B1-1, B2-2 und C-1 eingewogen und für 20 Sekunden mit einem Schnellrührer vorvermischt. Anschließend erfolgte die Zugabe der Komponente B1-2 und ein Vermischen für 10 Sekunden bei gleicher Geschwindigkeit. Zu dieser Mischung wurde schließlich die Komponente D-1 zugegeben, weitere 7 Sekunden gemischt und die Mischung in ein vorbereitetes Papierkästchen mit einem Grundriss von 50 cm x 50 cm x 50 cm überführt.

Die Höhe der Polyurethanweichschaumstoffblöcke betrug ca. 50-55 cm. Der fertige Polyurethanweichschaum wurde im Papierkästchen ca. 20-24 Stunden gelagert, bevor dieser zur Ausprüfung in Probekörper gesägt wurde. Die Stauchhärte und die Rohdichte der Polyurethanweichschaumstoffe wurde gemäß DIN EN ISO 3386-1-98 bestimmt.

Bei der Verwendung einer Komponente K wurde diese zunächst in der Komponente A1-1 vorverrührt, bevor die restlichen Rezepturkomponenten wie oben beschrieben zugegeben wurden.

Ergebnisse

a) Laborweichschaumstoffe (Tabelle 1)

Ohne Komponente K zeigte der resultierende Polyurethanweichschaumstoff eine hohe Emission an cyclischem Propylencarbonat (Vergleichsbeispiel 1), bei Einsatz einer P-O-haltigen Verbindung kann diese Emission verringert werden (Vergleichsbeispiel 2). Überraschenderweise resultiert die Zugabe einer Komponente K jedoch durchgehend in niedrigere Werte für cyclisches Propylencarbonat in der Emissionsbestimmung (Beispiele 3 bis 15) im Vergleich zu den Vergleichsbeispielen 1 und 2.

Überraschenderweise führt schon eine sehr geringe Zugabe ab 0,05 Gew.-Tle. der Komponente K, bezogen auf 100 Gew.-Tle. der Komponente A1-1, zu einer Verringerung der Emission an cyclischem Propylencarbonat, wie beispielsweise im Vergleich von Beispiel 7, 8 und 15 mit den Vergleichsbeispielen 1 und 2 zeigt (Tabelle 1).

b) Laborkistenweichschaumstoffe (Tabelle 2)

Ohne Komponente K zeigte der resultierende Polyurethanweichschaumstoff eine hohe Emission an cyclischem Propylencarbonat (Vergleichsbeispiel 16), wobei im Vergleich zum im kleineren Maßstab hergestellten Laborweichschaumstoff (Vergleichsbeispiel 1) ein höheres Emissions-Niveau an cyclischem Propylencarbonat gefunden wird. Bei Einsatz einer P-O-haltigen Verbindung kann diese Emission verringert werden (Vergleichsbeispiel 17). Überraschenderweise resultiert die Zugabe einer erfindungsgemäßen Komponente K jedoch durchgehend in deutlich niedrigere Werte für cyclisches Propylencarbonat in der Emissionsbestimmung (Beispiele 18 bis 21) im Vergleich zu den Vergleichsbeispielen 16 und 17.

Überraschenderweise führt schon eine sehr geringe Zugabe ab 0,05 Gew.-Tle. der Komponente K, bezogen auf 100 Gew.-Tle. der Komponente A1-1, zu einer Verringerung der Emission an cyclischem Propylencarbonat, wie die Beispiele 18 und 20 im Vergleich mit den Vergleichsbeispielen 16 und 17 zeigen (Tabelle 2).

Tabelle 1: Laborweichschaumstoff

| KOMPONENTE \ Beispiel | | **1 (Vgl.)** | **2 (Vgl.)** | **3** | **4** | **5** | **6** |
|---|---|---|---|---|---|---|---|
| A1-1 | [Gew.-Tle.] | 100 | 100 | 100 | 100 | 100 | 100 |
| B1-1 | [Gew.-Tle.] | 0,12 | 0,12 | 0,12 | 0,12 | 0,12 | 0,12 |
| B1-2 | [Gew.-Tle.] | 0,18 | 0,18 | 0,18 | 0,18 | 0,18 | 0,18 |
| B2-1 | [Gew.-Tle.] | 1,20 | 1,20 | 1,20 | 1,20 | 1,20 | 1,20 |
| C-1 | [Gew.-Tle.] | 4,50 | 4,50 | 4,50 | 4,50 | 4,50 | 4,50 |
| Fyrol-PNX | [Gew.-Tle.] | - | 2,0 | - | - | - | - |
| K1-1 | [Gew.-Tle.] | - | - | 2,0 | - | - | - |
| K1-2 | [Gew.-Tle.] | - | - | - | 2,0 | - | - |
| K2-1 | [Gew.-Tle.] | - | - | - | - | 2,0 | - |
| K3-1 | [Gew.-Tle.] | - | - | - | - | - | 2,0 |
| D-1 | [Gew.-Tle.] | 56,01 | 56,01 | 56,01 | 56,01 | 56,01 | 56,01 |
| Kennzahl | | 108 | 108 | 108 | 108 | 108 | 108 |
| Rohdichte | kg $m^{-3}$ | 27.86 | 27.83 | 30.37 | 25.92 | 24.03 | 25.28 |
| Stauchhärte 40 % Kompression (4.Zyklus) | kPa | 5,02 | 6,22 | 8,25 | 4,08 | 5,29 | 4,54 |
| cycl. Propylencarbonat | [mg/kg] | 92 | 13 | 6 | 7 | 8 | 3 |

Tabelle 1 ( Fortsetzung)

| KOMPONENTE \ Beispiel | | 7 | 8 | 9 | 10 | 11 | 12 | 13 | 14 | 15 |
|---|---|---|---|---|---|---|---|---|---|---|
| A1-1 | [Gew.-Tle.] | 100 | 100 | 100 | 100 | 100 | 100 | 100 | 100 | 100 |
| B1-1 | [Gew.-Tle.] | 0,12 | 0,12 | 0,12 | 0,12 | 0,12 | 0,12 | 0,12 | 0,12 | 0,12 |
| B1-2 | [Gew.-Tle.] | 0,18 | 0,18 | 0,18 | 0,18 | 0,18 | 0,18 | 0,18 | 0,18 | 0,18 |
| B2-1 | [Gew.-Tle.] | 1,20 | 1,20 | 1,20 | 1,20 | 1,20 | 1,20 | 1,20 | 1,20 | 1,20 |
| C-1 | [Gew.-Tle.] | 4,50 | 4,50 | 4,50 | 4,50 | 4,50 | 4,50 | 4,50 | 4,50 | 4,50 |
| Fyrol-PNX | [Gew.-Tle.] | - | - | - | - | - | - | - | - | - |
| K1-3 | [Gew.-Tle.] | 0,08 | - | - | - | - | - | - | - | - |
| K1-4 | [Gew.-Tle.] | - | 0,8 | 3,5 | 5,5 | - | - | - | - | - |
| K3-2 | [Gew.-Tle.] | - | - | - | - | - | - | - | 1,0 | - |
| K3-3 | [Gew.-Tle.] | - | - | - | - | 1,5 | 3,5 | - | - | - |
| K4-1 | [Gew.-Tle.] | - | - | - | - | - | - | - | - | 0,08 |
| K5-1 | [Gew.-Tle.] | - | - | - | - | - | - | 1,0 | - | - |
| D-1 | [Gew.-Tle.] | 56,01 | 56,01 | 56,01 | 56,01 | 56,01 | 56,01 | 56,01 | 56,01 | 56,01 |
| Kennzahl | | 108 | 108 | 108 | 108 | 108 | 108 | 108 | 108 | 108 |
| Rohdichte | kg $m^{-3}$ | 27.68 | 25.76 | 24.08 | 25.50 | 24.93 | 24.38 | 25,09 | 23,67 | 28,77 |
| Stauchhärte 40 % Kompression (4.Zyklus) | kPa | 6,83 | 4,55 | 5,00 | 4,58 | 5,09 | 5,28 | 5,75 | 6,20 | 6,68 |
| cycl. Propylencarbonat | [mg/kg] | 6 | 7 | 6 | 9 | 11 | 2 | 10 | 9 | 7 |

Tabelle 2: Laborkistenweichschaumstoff

| KOMPONENTE \ Beispiel | | **16 (Vgl.)** | **17 (Vgl.)** | **18** | **19** | **20** | **21** |
|---|---|---|---|---|---|---|---|
| A1-1 | [Gew.-Tle.] | 2000 | 2000 | 2000 | 2000 | 2000 | 2000 |
| B1-1 | [Gew.-Tle.] | 2,4 | 2,4 | 2,4 | 2,4 | 2,4 | 2,4 |
| B1-2 | [Gew.-Tle.] | 3,6 | 3,6 | 3,6 | 3,6 | 3,6 | 3,6 |
| B2-2 | [Gew.-Tle.] | 24 | 24 | 24 | 24 | 24 | 24 |
| C-1 | [Gew.-Tle.] | 90 | 90 | 90 | 90 | 90 | 90 |
| Fyrol-PNX | [Gew.-Tle.] | - | 40 | - | - | - | - |
| Kl-4 | [Gew.-Tle.] | - | - | 16 | - | - | - |
| K2-1 | [Gew.-Tle.] | - | - | - | 40 | - | - |
| K2-2 | [Gew.-Tle.] | - | - | - | - | 16 | - |
| K3-1 | [Gew.-Tle.] | - | - | - | - | - | 40 |
| D-1 | [Gew.-Tle.] | 1120 | 1120 | 1120 | 1120 | 1120 | 1120 |
| Kennzahl | | 108 | 108 | 108 | 108 | 108 | 108 |
| Rohdichte | kg $m^{-3}$ | 22.0 | 22.6 | 21.3 | 21.5 | 21.8 | 21.6 |
| Stauchhärte 40 % Kompression (4.Zyklus) | kPa | 4,15 | 5,43 | 3,69 | 3,69 | 3,89 | 3,3 |
| cycl. Propylencarbonat | [mg/kg] | 558 | 142 | 17 | 9 | 20 | 12 |

## Patentansprüche

**1.** Verfahren zur Herstellung von Polyurethanschaumstoffen durch Umsetzung von

Komponente A enthaltend Polyethercarbonatpolyol und mit einer Hydroxylzahl gemäß DIN 53240-1 (Juni 2013) von ≥ 20 mg KOH/g bis ≤ 120 mg KOH/g (Komponente A1) sowie gegebenenfalls eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-% (Komponente A2), wobei die Polyetherpolyole A2 frei von Carbonateinheiten sind,
B gegebenenfalls

B1) Katalysatoren, und/oder
B2) Hilfs- und Zusatzstoffen

C Wasser und/oder physikalischen Treibmitteln,
mit
D Di- und/oder Polyisocyanaten,
wobei die Herstellung bei einer Kennzahl von ≥ 90 bis ≤ 120 erfolgt,
**dadurch gekennzeichnet, dass** die Herstellung in Gegenwart einer Komponente K erfolgt, wobei Komponente K ausgewählt ist aus einer oder mehreren Verbindungen der Gruppe bestehend aus
K1 Dicarbonylverbindungen gemäß der Formel (II), ausgenommen Dicarbonylverbindungen, die Ester von ein- oder mehrbasigen Carbonsäuren sind,

$$(R^2)_x\text{-}(C{=}O)\text{-}(R^1)_n\text{-}(C{=}O)\text{-}(R^3)_y \qquad \text{(II)}$$

wobei

n eine ganze Zahl ≥ 0 bis ≤ 6, bevorzugt ≥ 1 bis ≤ 4, besonders bevorzugt ist n = 1, 2 oder 4, höchst bevorzugt ist n = 1 oder 2,
x,y gleich oder verschieden sein können und für eine ganze Zahl ≥ 1 bis ≤ 3, bevorzugt 1 oder 2 stehen,

$R^1$ gleich oder verschieden sein kann und für substituiertes oder unsubstituiertes C1-C22-Alkylen, substituiertes oder unsubstituiertes C1-C22-Alkenylen, substituiertes oder unsubstituiertes C6-C18-Arylen, Heteroarylen, Amine oder Amide steht oder Bestandteil eines 4 bis 7 gliedrigen Rings oder polycyclischen Systems ist,
$R^2$, $R^3$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Amin, Amid, Hydroxyl oder Nitril stehen oder Bestandteile eines 4 bis 7 gliedrigen Rings oder polycyclischen Systems sind,

K2 β-Ketonitrile gemäß der Formel (III),

$$(R^5)_w\text{-}(C{=}O)\text{-}C(H)(R^4)(\text{-}CN) \qquad \text{(III)}$$

wobei

w eine ganze Zahl ≥ 1 bis ≤ 3, bevorzugt 1 oder 2 ist,
$R^4$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Amin oder Amid steht oder Bestandteil eines 4 bis 7 gliedrigen Rings oder polycyclischen Systems ist,
$R^5$ gleich oder verschieden sein kann und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteil eines 4 bis 7 gliedrigen Rings oder polycyclischen Systems ist,

K3 Dicarbonylverbindungen mit der Formel (IV),

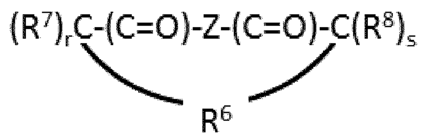

(IV)

wobei

Z für -O-, -N($R^9$)- oder C1-C6-Alkylen steht,
r,s für 1 oder 2 stehen, wobei r und s für 2 stehen, wenn $R^6$ für eine Einfachbindung, $-C(R^9)_2-$, -O- oder -N($R^9$)- steht,
r für 1 und s für 2 stehen, wenn $R^6$ für =C(H)- steht,
r für 2 und s für 1 stehen, wenn $R^6$ für =C(H)- steht,
r und s für 1 stehen, wenn $R^6$ für eine Doppelbindung steht,
$R^6$ für eine Einfachbindung, Doppelbindung, $-C(R^9)_2-$, =C(H)-, -O- oder -N($R^9$)- steht,
$R^7$,$R^8$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteile eines 4 bis 7 gliedrigen Rings oder polycyclischen Systems sind,
$R^9$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl, Acyl, Amin, Amid, Hydroxyl oder Nitril steht oder Bestandteil eines 4 bis 7 gliedrigen Rings oder polycyclischen Systems ist,

K4 Hydroxycarbonsäuren, bevorzugt sind α-Hydroxy-Carbonsäuren oder β-Hydroxy-Carbonsäuren, besonders bevorzugt α-Hydroxybenzoesäure, Äpfelsäure oder Weinsäure,
K5 Carbonsäuresalzen, also Verbindungen aus Carboxylat-Anion und Kation, wobei das Kation $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ oder eine auf Ammonium basierende Verbindung $N(H)_o(R^{10})_p$ ist, wobei o und p eine ganze Zahl von 0 bis 4 sind, o + p = 4 ist und wobei $R^{10}$ für substituiertes oder unsubstituiertes C1-C22-Alkyl, substituiertes oder unsubstituiertes C1-C22-Alkenyl, substituiertes oder unsubstituiertes C6-C18-Aryl steht, bevorzugt ist das Kation eine auf Ammonium basierende Verbindung $N(H)_o(R^{10})_p$ wobei o, p, $R^{10}$ die zuvor genannte Bedeutung haben, besonders bevorzugt ist das Kation ausgewählt aus einer oder mehreren Ammonium basierenden Verbindungen der Gruppe bestehend aus $NH_4^+$, $(NR^{10}_4)^+$, $(NR^{10}_3H)^+$, wobei $R^{10}$ die

zuvor genannte Bedeutung hat,
und wobei Komponente K in einer Menge von ≥ 0,05 bis 10,0 Gew.-Teile, bevorzugt in einer Menge von ≥ 0,5 bis ≤ 6,0 Gew.-Teile, besonders bevorzugt von ≥ 1,0 bis ≤ 5,0 Gew.-Teile, eingesetzt wird, wobei sich alle Gewichtsteilangaben der Komponente K auf die Summe der Gewichtsteile der Komponenten A1 + A2 = 100 Gewichtsteile beziehen.

**2.** Verfahren gemäß Anspruch 1, wobei Komponente A die folgende Zusammensetzung aufweist:

A1 ≥ 40 bis ≤ 100 Gew.-Teile eines oder mehrerer Polyethercarbonatpolyole mit einer Hydroxylzahl gemäß DIN 53240-1 (Juni 2013) von ≥ 20 mg KOH/g bis ≤ 120 mg KOH/g,
A2 ≤ 60 bis ≥ 0 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 0 Gew.-Teile, bezogen auf die Summe der Gew.-Teile der Komponenten A1 und A2, eines oder mehrerer Polyetherpolyole mit einer Hydroxylzahl gemäß DIN 53240-1 (Juni 2013) ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,
A4 ≤ 40 bis ≥ 0 Gew.-Teile, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teile, bezogen auf die Summe der Gew.-Teile der Komponenten A1 und A2, Polyole, die nicht unter die Definition der Komponenten A1 bis A4 fallen.
wobei alle Gewichtsteilangaben der Komponenten A1, A2, A3, A4, A5 so normiert sind, dass die Summe der Gewichtsteile A1 + A2 in der Zusammensetzung 100 ergibt.

**3.** Verfahren gemäß Anspruch 1 oder 2, wobei Komponente K in einer Menge von ≥ 0,5 bis ≤ 6,0 Gew.-Teile eingesetzt wird, wobei sich alle Gewichtsteilangaben der Komponente K auf die Summe der Gewichtsteile der Komponenten A1 + A2 = 100 Gewichtsteile beziehen.

**4.** Verfahren gemäß einem der Ansprüche 1 bis 3, wobei als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe
eingesetzt werden.

**5.** Verfahren gemäß einem der Ansprüche 1 bis 3, wobei als Komponente B

B1 Katalysatoren und
B2 gegebenenfalls Hilfs- und Zusatzstoffe
eingesetzt werden,
wobei als Komponente B1
B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und
B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf,
eingesetzt wird.

**6.** Verfahren gemäß einem der Ansprüche 2 bis 5, wobei Komponente A frei ist von Komponenten A3 und/oder A4.

**7.** Verfahren gemäß einem der Ansprüche 1 bis 6, wobei Komponente A umfasst:

A1 ≥ 65 bis ≤ 75 Gew.-Teile eines oder mehrerer Polyethercarbonatpolyole mit einer Hydroxylzahl gemäß DIN

53240-1 (JUNI 2013) von ≥ 20 mg KOH/g bis ≤ 120 mg KOH/g, und
A2 ≤ 35 bis ≥ 25 Gew.-Teile eines oder mehrerer Polyetherpolyole mit einer Hydroxylzahl gemäß DIN 53240-1 (JUNI 2013) von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind.

**8.** Verfahren gemäß einem der Ansprüche 1 bis 7, wobei Komponente A1 ein Polyethercarbonatpolyol umfasst, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist.

**9.** Verfahren gemäß einem der Ansprüche 1 bis 8, wobei Komponente K ausgewählt ist aus einer oder mehrerer Verbindungen der Gruppe bestehend aus

K1 Dicarbonylverbindungen gemäß der Formel (II), ausgenommen Dicarbonylverbindungen, die Ester von ein- oder mehrbasigen Carbonsäuren sind,

$$(R^2)_x\text{-(C=O)-}(R^1)_n\text{-(C=O)-}(R^3)_y \qquad \text{(II)}$$

wobei

n für 1, 2 oder 4, bevorzugt 1 oder 2 steht,
x,y gleich oder verschieden sein können und für 1 oder 2 stehen,
$R^1$ gleich oder verschieden sein kann und für substituiertes oder unsubstituiertes C1-C22-Alkylen, substituiertes oder unsubstituiertes C6-C18-Arylen oder für Heteroarylen steht,
$R^2$, $R^3$ gleich oder verschieden sein können und für substituiertes oder unsubstituiertes C1-C22-Alkyl, Amin, Amid oder Hydroxyl stehen,

K2 β-Ketonitrile gemäß der Formel (III),

$$(R^5)_w\text{-(C=O)-C(H)}(R^4)\text{(-CN)} \qquad \text{(III)}$$

wobei

w für 1 oder 2 steht,
$R^4$ für H steht,
$R^5$ gleich oder verschieden sein kann und für Amin, Amid oder Acyl steht,

K3 Dicarbonylverbindungen mit der Formel (IV), ,

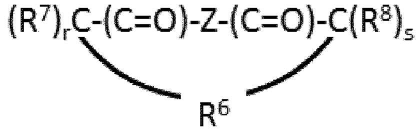

(IV)

wobei

Z für -O- oder -N($R^9$)- steht,
r,s für 1 oder 2 stehen, wobei
r und s für 2 stehen, wenn $R^6$ für eine Einfachbindung oder -C($R^9$)$_2$- steht,
r für 1 und s für 2 stehen, wenn $R^6$ für =C(H)- steht,
r für 2 und s für 1 stehen, wenn $R^6$ für =C(H)- steht,
r und s für 1 stehen, wenn $R^6$ für eine Doppelbindung steht,
$R^6$ für eine Einfachbindung, Doppelbindung, -C($R^9$)$_2$- oder =C(H)- steht,
$R^7$,$R^8$ gleich oder verschieden sein können und für H, substituiertes oder unsubstituiertes C1-C22-Alkyl, substituiertes oder unsubstituiertes C1-C22-Alkenyl, substituiertes oder unsubstituiertes C6-C18-Aryl, oder Heteroaryl stehen oder Bestandteile eines 4 bis 7 gliedrigen Rings oder polycyclischen Systems sind,
$R^9$ für H, substituiertes oder unsubstituiertes C1-C22-Alkyl, substituiertes oder unsubstituiertes C1-C22-Alkenyl, substituiertes oder unsubstituiertes C6-C18-Aryl, Heteroaryl oder Hydroxyl steht,

K4 eine oder mehrere Verbindungen ausgewählt aus der Gruppe enthaltend α-Hydroxy-Carbonsäuren und β-Hydroxy-Carbonsäuren,
K5 Carbonsäuresalzen, also Verbindungen aus Carboxylat-Anion und Kation, wobei das Kation eine auf Ammonium basierende Verbindung $N(H)_o(R^{10})_p$ ist, wobei o und p eine ganze Zahl von 0 bis 4 sind, o + p = 4 ist und wobei $R^{10}$ für substituiertes oder unsubstituiertes C1-C22-Alkyl, substituiertes oder unsubstituiertes C1-C22-Alkenyl, substituiertes oder unsubstituiertes C6-C18-Aryl steht.

**10.** Verfahren gemäß einem der Ansprüche 1 bis 8, wobei

K1 ausgewählt ist aus einer oder mehreren Verbindungen der Gruppe bestehend aus Bernsteinsäure, Thiophen-2,5-Dicarbonsäure, Malonsäurediamid, Acetoacetamid, N,N-Dimethylacetoacetamid, Acetylaceton, 5,5-Dimethyl-1,3-cyclohexandion, Terephthalsäure, Oxalsäurediamid, Diacetylhydrazin, Adipinsäure, Maleinsäure oder Zitrakonsäure,
K2 ausgewählt ist aus einer oder mehreren Verbindungen der Gruppe bestehend aus Cyanoacetohydrazid, N-Benzyl-2-Cyanoacetamid, Cyanacetamid, 2-Amino-2-Cyanoacetamid, N-tert-Butyl-2-Cyanoacetamid oder Cyanoacetylharnstoff.
K3 ausgewählt ist aus einer oder mehreren Verbindungen der Gruppe bestehend aus Phthalsäureanhydrid, 1,2,3,6-Tetrahydro-Phthalsäureanhydrid, N-Hydroxyphthalimid, Dodecenylbernsteinsäureanhydrid, Maleinsäureanhydrid oder Zitrakonsäureanhydrid.

**11.** Verfahren gemäß einem der Ansprüche 1 bis 10, wobei eine Komponente B eingesetzt wird, die mindestens ein Zinn(II)-Salz der Formel (IX)

$$Sn(C_xH_{2x+1}COO)_2 \qquad (IX)$$

enthält, wobei x eine ganze Zahl von 8 bis 24, bevorzugt 10 bis 20, besonders bevorzugt von 12 bis 18 bedeutet.

**12.** Verfahren gemäß einem der Ansprüche 1 bis 11, wobei in Komponente D 2,4- und/oder 2,6-TDI als Isocyanatkomponente eingesetzt wird

**13.** Polyurethanschaumstoffe, erhältlich durch ein Verfahren gemäß einem der Ansprüche 1 bis 12.

**14.** Polyurethanschaumstoffe gemäß Anspruch 13, wobei es sich um Polyurethan-Weichschaumstoffe handelt.

**15.** Verwendung der Polyurethanschaumstoffe gemäß Anspruch 13 oder 14 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

## Claims

**1.** Process for producing polyurethane foams by reaction of

component A containing polyether carbonate polyol and having a hydroxyl number in accordance with DIN 53240-1 (June 2013) of from ≥ 20 mg KOH/g to ≤ 120 mg KOH/g (component A1) and optionally one or more polyether polyols having a hydroxyl number in accordance with DIN 53240-1 (June 2013) of from ≥ 20 mg KOH/g to ≤ 250 mg KOH/g and a content of ethylene oxide of from ≥ 0 to ≤ 60% by weight (component A2), with the polyether polyols A2 being free of carbonate units,
B optionally

B1) catalysts, and/or
B2) auxiliaries and additives

C water and/or physical blowing agents,
with
D di- and/or polyisocyanates,

where the production is effected at an index of from ≥ 90 to ≤ 120,
**characterized in that** the production is effected in the presence of a component K, where component K is selected from one or more compounds from the group consisting of
K1 dicarbonyl compounds of the formula (II), excluding dicarbonyl compounds that are esters of mono- or polybasic carboxylic acids,

$$(R^2)_x\text{-(C=O)-}(R^1)_n\text{-(C=O)-}(R^3)_y \qquad (II)$$

where

n is an integer of ≥ 0 to ≤ 6, preferably ≥ 1 to ≤ 4, more preferably n = 1, 2 or 4, most preferably n = 1 or 2,
x, y may be the same or different and are an integer of ≥ 1 to ≤ 3, preferably 1 or 2,
$R^1$ may be the same or different and is substituted or unsubstituted C1-C22-alkylene, substituted or unsubstituted C1-C22-alkenylene, substituted or unsubstituted C6-C18-arylene, heteroarylene, amines or amides, or is part of a 4- to 7-membered ring or polycyclic system,
$R^2$, $R^3$ may be the same or different and are H, substituted or unsubstituted C1-C22-alkyl, substituted or unsubstituted C1-C22-alkenyl, substituted or unsubstituted C6-C18-aryl, heteroaryl, amine, amide, hydroxyl or nitrile, or are parts of a 4-to 7-membered ring or polycyclic system,

K2 β-keto nitriles of the formula (III)

$$(R^5)_w\text{-(C=O)-C(H)}(R^4)\text{(-CN)} \qquad (III)$$

where

w is an integer of ≥ 1 to ≤ 3, preferably 1 or 2,
$R^4$ is H, substituted or unsubstituted C1-C22-alkyl, substituted or unsubstituted C1-C22-alkenyl, substituted or unsubstituted C6-C18-aryl, heteroaryl, amine or amide, or is part of a 4- to 7-membered ring or polycyclic system,
$R^5$ may be the same or different and is H, substituted or unsubstituted C1-C22-alkyl, substituted or unsubstituted C1-C22-alkenyl, substituted or unsubstituted C6-C18-aryl, heteroaryl, acyl, amine, amide, hydroxyl or nitrile, or is part of a 4- to 7-membered ring or polycyclic system,

K3 dicarbonyl compounds having the formula (IV),

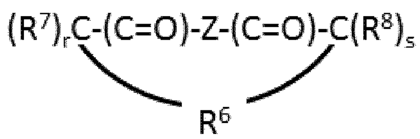

(IV)

where

Z is -O-, -N($R^9$)- or C1-C6-alkylene,
r, s are 1 or 2, where r and s are 2 when $R^6$ is a single bond,-C($R^9$)$_2$-, -O- or -N($R^9$)-, r is 1 and s is 2 when $R^6$ is =C(H)-, r is 2 and s is 1 when $R^6$ is =C(H)-, r and s are 1 when $R^6$ is a double bond,
$R^6$ is a single bond, double bond, -C($R^9$)$_2$-, =C(H)-, -O- or -N($R^9$)-,
$R^7$, $R^8$ may be the same or different and is H, substituted or unsubstituted C1-C22-alkyl, substituted or unsubstituted C1-C22-alkenyl, substituted or unsubstituted C6-C18-aryl, heteroaryl, acyl, amine, amide, hydroxyl or nitrile, or are parts of a 4- to 7-membered ring or polycyclic system,
$R^9$ is H, substituted or unsubstituted C1-C22-alkyl, substituted or unsubstituted C1-C22-alkenyl, substituted or unsubstituted C6-C18-aryl, heteroaryl, acyl, amine, amide, hydroxyl or nitrile, or is part of a 4- to 7-membered ring or polycyclic system,

K4 hydroxycarboxylic acids, preferred are α-hydroxycarboxylic acids or β-hydroxycarboxylic acids, more preferably α-hydroxybenzoic acid, malic acid or tartaric acid,
K5 carboxylic salts, i.e. compounds of carboxylate anion and cation, where the cation is $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ or an ammonium-based compound $N(H)_o(R^{10})_p$ where o and p are an integer

from 0 to 4, o + p = 4 and where $R^{10}$ is substituted or unsubstituted C1-C22-alkyl, substituted or unsubstituted C1-C22-alkenyl, substituted or unsubstituted C6-C18-aryl , the cation is preferably an ammonium-based compound $N(H)_o(R^{10})_p$ where o, p, $R^{10}$ have the definition given above, and the cation is more preferably selected from one or more ammonium-based compounds from the group consisting of $NH_4^+$, $(NR^{10}_4)^+$, $(NR^{10}_3H)^+$, where $R^{10}$ has the definition given above,
and where component K is used in an amount of from ≥ 0.05 to 10.0 parts by weight, preferably in an amount of from ≥ 0.5 to ≤ 6.0 parts by weight, particularly preferably from ≥ 1.0 to ≤ 5.0 parts by weight, where all parts by weight figures for the component K are based on the sum of the parts by weight of the components A1 + A2 = 100 parts by weight.

**2.** Process according to Claim 1, wherein component A has the following composition:

A1 from ≥ 40 to ≤ 100 parts by weight of one or more polyether carbonate polyols having a hydroxyl number in accordance with DIN 53240-1 (June 2013) of from ≥ 20 mg KOH/g to ≤ 120 mg KOH/g,
A2 from ≤ 60 to ≥ 0 parts by weight of one or more polyether polyols having a hydroxyl number in accordance with DIN 53240-1 (June 2013) of from ≥ 20 mg KOH/g to ≤ 250 mg KOH/g and a content of ethylene oxide of from ≥ 0 to ≤ 60% by weight, with the polyether polyols A2 being free of carbonate units,
A3 from ≤ 20 to ≥ 0 parts by weight, based on the sum of the parts by weight of the components A1 and A2, of one or more polyether polyols having a hydroxyl number in accordance with DIN 53240-1 (June 2013) of from ≥ 20 mg KOH/g to ≤ 250 mg KOH/g and a content of ethylene oxide of > 60% by weight, with the polyether polyols A3 being free of carbonate units,
A4 from ≤ 40 to ≥ 0 parts by weight, based on the sum of the parts by weight of the components A1 and A2, of one or more polymer polyols, PUD polyols and/or PIPA polyols,
A5 from ≤ 40 to ≥ 0 parts by weight, based on the sum of the parts by weight of the components A1 and A2, of polyols which do not come under the definition of the components A1 to A4,
where all parts by weight figures for the components A1, A2, A3, A4, A5 are normalized so that the sum of the parts by weight of A1 + A2 in the composition is 100.

**3.** Process according to Claim 1 or 2, wherein component K is used in an amount of from ≥ 0.5 to ≤ 6.0 parts by weight, where all parts by weight figures for the component K are based on the sum of the parts by weight of the components A1 + A2 = 100 parts by weight.

**4.** Process according to any of Claims 1 to 3, wherein

B1 catalysts such as

a) aliphatic tertiary amines, cycloaliphatic tertiary amines, aliphatic amino ethers, cycloaliphatic amino ethers, aliphatic amidines, cycloaliphatic amidines, urea and derivatives of urea and/or
b) tin(II) salts of carboxylic acids and

B2 optionally auxiliaries and additives
are used as component B.

**5.** Process according to any of Claims 1 to 3, wherein

B1 catalysts and
B2 optionally auxiliaries and additives are used as component B,
where the following are used as component B1:

B1.1 from ≥ 0.05 to ≤ 1.5 parts by weight, based on the sum of the parts by weight of the components A1 and A2, of urea and/or derivatives of urea and
B1.2 from ≥ 0.03 to ≤ 1.5 parts by weight, based on the sum of the parts by weight of components A1 and A2, of catalysts other than those of the component B1.2, with the content of amine catalysts in the component B1.2 being not more than 50% by weight based on component B1.

**6.** Process according to any of Claims 2 to 5, wherein component A is free of components A3 and/or A4.

**7.** Process according to any of Claims 1 to 6, wherein component A comprises:

A1 from ≥ 65 to ≤ 75 parts by weight of one or more polyether carbonate polyols having a hydroxyl number in accordance with DIN 53240-1 (JUNE 2013) of from ≥ 20 mg KOH/g to ≤ 120 mg KOH/g, and
A2 from ≤ 35 to ≥ 25 parts by weight of one or more polyether polyols having a hydroxyl number in accordance with DIN 53240-1 (JUNE 2013) of from ≥ 20 mg KOH/g to ≤ 250 mg KOH/g and a content of ethylene oxide of from ≥ 0 to ≤ 60% by weight, with the polyether polyols A2 being free of carbonate units.

**8.** Process according to any of Claims 1 to 7, wherein component A1 comprises a polyether carbonate polyol which is obtainable by copolymerization of carbon dioxide and one or more alkylene oxides in the presence of one or more H-functional starter molecules, with the polyether carbonate polyol preferably having a $CO_2$ content of from 15 to 25% by weight.

**9.** Process according to any of Claims 1 to 8, wherein component K is selected from among one or more compounds of the group consisting of

K1 dicarbonyl compounds of the formula (II), excluding dicarbonyl compounds that are esters of mono- or polybasic carboxylic acids,

$$(R^2)_x\text{-}(C{=}O)\text{-}(R^1)_n\text{-}(C{=}O)\text{-}(R^3)_y \qquad \text{(II)}$$

where

n is 1, 2 or 4, preferably 1 or 2,
x, y may be the same or different and are 1 or 2,
$R^1$ may be the same or different and is substituted or unsubstituted C1-C22-alkylene, substituted or unsubstituted C6-C18-arylene or heteroarylene,
$R^2$, $R^3$ may be the same or different and are substituted or unsubstituted C1-C22-alkyl, amine, amide or hydroxyl,

K2 β-keto nitriles of the formula (III)

$$(R^5)_w\text{-}(C{=}O)\text{-}C(H)(R^4)(\text{-}CN) \qquad \text{(III)}$$

where

w is 1 or 2,
$R^4$ is H,
$R^5$ may be the same or different and is amine, amide or acyl,

K3 dicarbonyl compounds having the formula (IV)

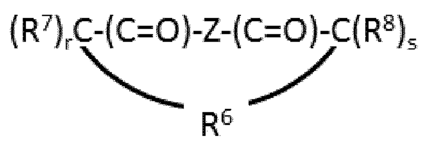

(IV)

where

Z is -O- or -N($R^9$)-,
r, s are 1 or 2, where r and s are 2 when $R^6$ is a single bond or -C($R^9$)$_2$-, r is 1 and s is 2 when $R^6$ is =C(H)-, r is 2 and s is 1 when $R^6$ is =C(H)-, r and s are 1 when $R^6$ is a double bond,
$R^6$ is a single bond, double bond, -C($R^9$)$_2$- or =C(H)-,
$R^7$, $R^8$ may be the same or different and are H, substituted or unsubstituted C1-C22-alkyl, substituted or unsubstituted C1-C22-alkenyl, substituted or unsubstituted C6-C18-aryl, or heteroaryl, or are parts of a 4- to 7-membered ring or polycyclic system,
$R^9$ is H, substituted or unsubstituted C1-C22-alkyl, substituted or unsubstituted C1-C22-alkenyl, substituted or unsubstituted C6-C18-aryl, heteroaryl or hydroxyl,

K4 one or more compounds selected from the group comprising α-hydroxycarboxylic acids and β-hydroxycarboxylic acids,
K5 carboxylic salts, i.e. compounds of carboxylate anion and cation, where the cation is an ammonium-based compound $N(H)_o(R^{10})_p$ where o and p are an integer from 0 to 4, o + p = 4 and where $R^{10}$ is substituted or unsubstituted C1-C22-alkyl, substituted or unsubstituted C1-C22-alkenyl, substituted or unsubstituted C6-C18-aryl.

**10.** Process according to any of Claims 1 to 8, wherein

K1 is selected from one or more compounds from the group consisting of succinic acid, thiophene-2,5-dicarboxylic acid, malonamide, acetoacetamide, N,N-dimethylacetoacetamide, acetylacetone, 5,5-dimethyl-1,3-cyclohexanedione, terephthalic acid, oxalamide, diacetylhydrazine, adipic acid, maleic acid or citraconic acid,
K2 is selected from one or more compounds from the group consisting of cyanoacetohydrazide, N-benzyl-2-cyanoacetamide, cyanoacetamide, 2-amino-2-cyanoacetamide, N-tert-butyl-2-cyanoacetamide or cyanoacetylurea,
K3 is selected from one or more compounds from the group consisting of phthalic anhydride, 1,2,3,6-tetrahydrophthalic anhydride, N-hydroxyphthalimide, dodecenylsuccinic anhydride, maleic anhydride or citraconic anhydride.

**11.** Process according to any of Claims 1 to 10, wherein a component B which contains at least one tin(II) salt of the formula (IX)

$$Sn(C_xH_{2x+1}COO)_2 \qquad (IX)$$

where x is an integer from 8 to 24, preferably from 10 to 20, particularly preferably from 12 to 18, is used.

**12.** Process according to any of Claims 1 to 11, wherein 2,4- and/or 2,6-TDI is used as isocyanate component in component D.

**13.** Polyurethane foams obtainable by a process according to any of Claims 1 to 12.

**14.** Polyurethane foams according to Claim 13, wherein the polyurethane foams are flexible polyurethane foams.

**15.** Use of the polyurethane foams according to Claim 13 or 14 for producing furniture upholstery, textile inserts, mattresses, automobile seats, headrests, armrests, sponges, foam sheets for use in automobile components such as roof liners, door trim, seat cushions and components.

## Revendications

**1.** Procédé pour la préparation de mousses de polyuréthane par transformation de

composant A contenant un polyéthercarbonatepolyol et doté d'un indice d'hydroxyle selon la norme DIN 53240-1 (juin 2013) de ≥ 20 mg de KOH/g à ≤ 120 mg de KOH/g (composant A1) ainsi qu'éventuellement un ou plusieurs polyétherpolyols dotés d'un indice d'hydroxyle selon la norme DIN 53240-1 (juin 2013) de ≥ 20 mg de KOH/g à ≤ 250 mg KOH/g et d'une teneur en oxyde d'éthylène de ≥ 0 à ≥ 60 % en poids (composant A2), les polyétherpolyols A2 étant exempts de motifs de type carbonate,
B éventuellement

B1) des catalyseurs, et/ou
B2) des auxiliaires et des additifs

C de l'eau et/ou des agents gonflants physiques, avec
D des diisocyanates et/ou des polyisocyanates,
la préparation étant réalisée à un indice de ≥ 90 à ≤ 120,
**caractérisé en ce que** la préparation est réalisée en présence d'un composant K, le composant K étant choisi parmi un ou plusieurs composés du groupe constitué par
K1 des composés de type dicarbonyle selon la formule (II), à l'exception de composés de type dicarbonyle qui

sont des esters d'acides carboxyliques monobasiques ou polybasiques, (

$$R^2)_x(C{=}O)\text{-}(R^1)_n\text{-}(C{=}O)\text{-}(R^3)_y \qquad (II)$$

n étant un nombre entier ≥ 0 à ≤ 6, préférablement ≥ 1 à ≤ 4, particulièrement préférablement n = 1, 2 ou 4, le plus préférablement n = 1 ou 2,
x, y pouvant être identiques ou différents et représentant un nombre entier ≥ 1 à ≤ 3, préférablement 1 ou 2,
$R^1$pouvant être identique ou différent et représentant C1-C22-alkylène substitué ou non substitué, C1-C22-alcénylène substitué ou non substitué, C6-C18-arylène substitué ou non substitué, hétéroarylène, des amines ou des amides ou faisant partie d'un cycle ou d'un système polycyclique de 4 à 7 chaînons,
$R^2$, $R^3$ pouvant être identiques ou différents et représentant H, C1-C22-alkyle substitué ou non substitué, C1-C22-alcényle substitué ou non substitué, C6-C18-aryle substitué ou non substitué, hétéroaryle, amine, amide, hydroxyle ou nitrile ou faisant partie d'un cycle ou d'un système polycyclique de 4 à 7 chaînons,

K2 des β-cétonitriles de formule (III), (R

$$^{5})_w\text{-}(C{=}O)\text{-}C(H)(R^4)(\text{-}CN) \qquad (III)$$

w étant un nombre entier ≥ 1 à ≤ 3, préférablement 1 ou 2,
$R^4$représentant H, C1-C22-alkyle substitué ou non substitué, C1-C22-alcényle substitué ou non substitué, C6-C18-aryle substitué ou non substitué, hétéroaryle, amine ou amide ou faisant partie d'un cycle ou d'un système polycyclique de 4 à 7 chaînons,
$R^5$pouvant être identique ou différent et représentant H, C1-C22-alkyle substitué ou non substitué, C1-C22-alcényle substitué ou non substitué, C6-C18-aryle substitué ou non substitué, hétéroaryle, acyle, amine, amide, hydroxyle ou nitrile ou faisant partie d'un cycle ou d'un système polycyclique de 4 à 7 chaînons,

K3 des composés de type dicarbonyle dotés de la formule (IV),

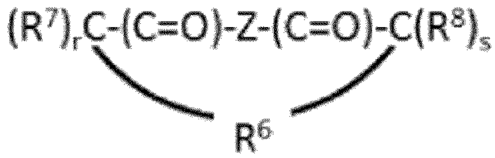

(IV)

Z représentant -O-, -N($R^9$)- ou C1-C6-alkylène, r, s représentant 1 ou 2,
r et s représentant 2, lorsque $R^6$ représente une simple liaison, -C($R^9$)$_2$-, -O- ou -N($R^9$),
r représentant 1 et s représentant 2, lorsque $R^6$ représente =C(H)-,
r représentant 2 et s représentant 1, lorsque $R^6$ représente =C(H)-,
r et s représentant 1, lorsque $R^6$ représente une double liaison,
$R^6$représentant une simple liaison, une double liaison, -C($R^9$)$_2$-, =C(H)-, -O- ou -N($R^9$)-,
$R^7$, $R^8$ pouvant être identiques ou différents et représentant H, C1-C22-alkyle substitué ou non substitué, C1-C22-alcényle substitué ou non substitué, C6-C18-aryle substitué ou non substitué, hétéroaryle, acyle, amine, amide, hydroxyle ou nitrile ou faisant partie d'un cycle ou d'un système polycyclique de 4 à 7 chaînons,
$R^9$représentant H, C1-C22-alkyle substitué ou non substitué, C1-C22-alcényle substitué ou non substitué, C6-C18-aryle substitué ou non substitué, hétéroaryle, acyle, amine, amide, hydroxyle ou nitrile ou faisant partie d'un cycle ou d'un système polycyclique de 4 à 7 chaînons,

K4 des acides hydroxycarboxyliques, préférablement des acides α-hydroxycarboxyliques ou des acides β-hydroxycarboxyliques, particulièrement préférablement l'acide α-hydroxybenzoïque, l'acide malique ou l'acide tartrique,
K5 des sels d'acides carboxyliques, c'est-à-dire des composés d'un anion carboxylate et d'un cation, le cation étant $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ ou un composé à base d'ammonium $N(H)_o(R^{10})_P$, o et p étant un nombre entier de 0 à 4, o + p = 4 et $R^{10}$ représentant C1-C22-alkyle substitué ou non substitué, C1-C22-alcényle substitué ou non substitué ou C6-C18-aryle substitué ou non substitué, préférablement le cation étant un composé à base d'ammonium $N(H)_o(R^{10})_P$, o, p, $R^{10}$ possédant la signification mentionnée

précédemment, particulièrement préférablement le cation étant choisi parmi un ou plusieurs composés à base d'ammonium du groupe constitué par $NH_4^+$, $(NR^{10}_4)^+$, $(NR^{10}_3H)^+$, $R^{10}$ possédant la signification mentionnée précédemment,
et le composant K étant utilisé en une quantité de ≥ 0,05 à ≤ 10,0 parties en poids, préférablement en une quantité de ≥ 0,5 à ≤ 6,0 parties en poids, particulièrement préférablement de ≥ 1,0 à ≤ 5,0 parties en poids, toutes les données de parties en poids des composants K se rapportant à la somme des parties en poids des composants A1 + A2 = 100.

**2.** Procédé selon la revendication 1, le composant A présentant la composition suivante :

A1 ≥ 40 à ≤ 100 parties en poids d'un ou plusieurs polyéthercarbonatepolyols dotés d'un indice d'hydroxyle selon la norme DIN 53240-1 (juin 2013) de ≥ 20 mg de KOH/g à ≤ 120 mg de KOH/g,
A2 ≤ 60 à ≥ 0 parties en poids d'un ou plusieurs polyétherpolyols dotés d'un indice d'hydroxyle selon la norme DIN 53240-1 (juin 2013) de ≥ 20 mg de KOH/g à ≤ 250 mg de KOH/g et d'une teneur en oxyde d'éthylène de ≥ 0 à ≤ 60 % en poids, les polyétherpolyols A2 étant exempts de motifs de type carbonate,
A3 ≤ 20 à ≥ 0 parties en poids, par rapport à la somme des parties en poids des composants A1 et A2, d'un ou plusieurs polyétherpolyols dotés d'un indice d'hydroxyle selon la norme DIN 53240-1 (juin 2013) ≥ 20 mg de KOH/g à ≤ 250 mg de KOH/g, et d'une teneur en oxyde d'éthylène de ≥ 60 % en poids, les polyétherpolyols A3 étant exempts de motifs de type carbonate,
A4 ≤ 40 à ≥ 0 parties en poids, par rapport à la somme des parties en poids des composants A1 et A2, d'un ou plusieurs polymèrepolyols, PHD-polyols et/ou PIPA-polyols,
A5 ≤ 40 à ≥ 0 parties en poids, par rapport à la somme des parties en poids des composants A1 et A2, de polyols, qui ne correspondent pas à la définition du composant A1 à A4,
toutes les données de parties en poids des composants A1, A2, A3, A4, A5 étant normées de telle sorte que la somme des parties en poids A1 + A2 dans la composition donne 100.

**3.** Procédé selon la revendication 1 ou 2, le composant K étant utilisé en une quantité de ≥ 0,5 à ≤ 6, 0 parties en poids, toutes les données de parties en poids du composant K se rapportant à la somme des parties en poids des composants A1 + A2 = 100.

**4.** Procédé selon l'une quelconque des revendications 1 à 3,

B1 des catalyseurs comme

a) des amines tertiaires aliphatiques, des amines tertiaires cycloaliphatiques, des aminoéthers aliphatiques, des aminoéthers cycloaliphatiques, des amidines aliphatiques, des amidines cycloaliphatiques, de l'urée et des dérivés d'urée et/ou
b) des sels d'étain(II) d'acides carboxyliques, et

B2 éventuellement des auxiliaires et des additifs étant utilisés en tant que composant B.

**5.** Procédé selon l'une quelconque des revendications 1 à 3,

B1 des catalyseurs et
B2 éventuellement des auxiliaires et des additifs étant utilisés en tant que composant B,
B1.1 ≥ 0,05 à ≤ 1,5 parties en poids, par rapport à la somme des parties en poids des composants A1 et A2, d'urée et/ou de dérivés d'urée et
B1.2 ≥ 0,03 à ≤ 1,5 parties en poids, par rapport à la somme des parties en poids des composants A1 et A2, d'autres catalyseurs que ceux du composant B1.2, la teneur en catalyseurs aminiques dans le composant B1.2 peut être de maximum 50 % en poids par rapport au composant B1,
étant utilisés en tant que composant B1.

**6.** Procédé selon l'une quelconque des revendications 2 à 5, le composant A étant exempt de composants A3 et/ou A4.

**7.** Procédé selon l'une quelconque des revendications 1 à 6, le composant A comprenant :

A1 ≥ 65 à ≤ 75 parties en poids d'un ou plusieurs polyéthercarbonatepolyols dotés d'un indice d'hydroxyle selon la norme DIN 53240-1 (juin 2013) de ≥ 20 mg de KOH/g à ≤ 120 mg de KOH/g, et

A2 ≤ 35 à ≥ 25 parties en poids d'un ou plusieurs polyétherpolyols dotés d'un indice d'hydroxyle selon la norme DIN 53240-1 (juin 2013) de ≥ 20 mg de KOH/g à ≤ 250 mg de KOH/g et d'une teneur en oxyde d'éthylène de ≥ 0 à ≤ 60 % en poids, les polyétherpolyols A2 étant exempts de motifs de type carbonate.

**8.** Procédé selon l'une quelconque des revendications 1 à 7, le composant A1 comprenant un polyéthercarbonatepolyol, qui peut être obtenu par copolymérisation de dioxyde de carbone, d'un ou plusieurs oxydes d'alkylène, en présence d'une ou plusieurs molécules de départ fonctionnalisées par H, le polyéthercarbonatepolyol présentant de préférence une teneur en $CO_2$ de 15 à 25 % en poids.

**9.** Procédé selon l'une quelconque des revendications 1 à 8, le composant K étant choisi parmi un ou plusieurs composés du groupe constitué par

K1 des composés de type dicarbonyle selon la formule (II), à l'exception de composés de type dicarbonyle qui sont des esters d'acides carboxyliques monobasiques ou polybasiques, (

$$R^2)_{x-}(C{=}O)\text{-}(R^1)n\text{-}(C{=}O).(R^3)y \qquad \text{(II)}$$

n représentant 1, 2 ou 4, préférablement 1 ou 2, x, y pouvant être identiques ou différents et représentant 1 ou 2,
$R^1$ pouvant être identique ou différent et représentant C1-C22-alkylène substitué ou non substitué, C6-C18-arylène substitué ou non substitué ou hétéroarylène,
$R^2$, $R^3$ pouvant être identiques ou différents et représentant C1-C22-alkyle substitué ou non substitué, amine, amide ou hydroxyle,

K2 des β-cétonitriles de formule (III),

$$(R^5)_w\text{-}(C{=}O)\text{-}C(H)(R^4)(\text{-}CN) \qquad \text{(III)}$$

w représentant 1 ou 2,
$R^4$représentant H,
$R^5$pouvant être identique ou différent et représentant amine, amide ou acyle,

K3 des composés de type dicarbonyle dotés de la formule (IV),

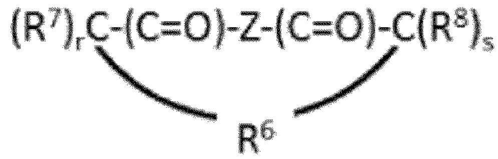

(IV)

Z représentant -O- ou -N($R^9$)-,
r, s représentant 1 ou 2,
r et s représentant 2, lorsque $R^6$ représente une simple liaison ou -C($R^9$)$_2$-,
r représentant 1 et s représentant 2, lorsque $R^6$ représente =C(H)-,
r représentant 2 et s représentant 1, lorsque $R^6$ représente =C(H)-,
r et s représentant 1, lorsque $R^6$ représente une double liaison,
$R^6$représentant une simple liaison, une double liaison, -C($R^9$)$_2$- ou =C(H)-,
$R^7$, $R^8$ pouvant être identiques ou différents et représentant H, C1-C22-alkyle substitué ou non substitué, C1-C22-alcényle substitué ou non substitué, C6-C18-aryle substitué ou non substitué ou hétéroaryle ou faisant partie d'un cycle ou d'un système polycyclique de 4 à 7 chaînons,
$R^9$représentant H, C1-C22-alkyle substitué ou non substitué, C1-C22-alcényle substitué ou non substitué, C6-C18-aryle substitué ou non substitué, hétéroaryle ou hydroxyle,

K4 un ou plusieurs composés choisis dans le groupe contenant des acides α-hydroxycarboxyliques et des acides β-hydroxycarboxyliques,

K5 des sels d'acides carboxyliques, c'est-à-dire des composés d'un anion carboxylate et d'un cation, le cation étant un composé à base d'ammonium $N(H)_o(R^{10})_P$, o et p étant un nombre entier de 0 à 4, o + p = 4 et $R^{10}$ représentant C1-C22-alkyle substitué ou non substitué, C1-C22-alcényle substitué ou non substitué ou C6-C18-aryle substitué ou non substitué.

**10.** Procédé selon l'une quelconque des revendications 1 à 8,

K1 étant choisi parmi un ou plusieurs composés du groupe constitué par l'acide succinique, l'acide thiophène-2,5-dicarboxylique, le diamide de l'acide malonique, l'acétoacétamide, le N,N-diméthylacétoacétamide, l'acétylacétone, la 5,5-diméthyl-1,3-cyclohexanedione, l'acide téréphtalique, le diamide de l'acide oxalique, la diacétylhydrazine, l'acide adipique, l'acide maléique et l'acide citraconique,
K2 étant choisi parmi un ou plusieurs composés du groupe constitué par le cyanoacétohydrazide, le N-benzyl-2-cyanoacétamide, le cyanoacétamide, le 2-amino-2-cyanoacétamide, le N-tert-butyl-2-cyanoacétamide et la cyanoacétylurée,
K3 étant choisi parmi un ou plusieurs composés du groupe constitué par l'anhydride phtalique l'anhydride 1,2,3,6-tétrahydrophtalique, le N-hydroxyphtalimide, l'anhydride dodécénylsuccinique, l'anhydride maléique et l'anhydride citraconique.

**11.** Procédé selon l'une quelconque des revendications 1 à 10, un composant B étant utilisé qui contient au moins un sel d'étain(II) de formule (IX)

$$Sn(C_xH_{2x+1}COO)_2 \qquad (IX)$$

x signifiant un nombre entier de 8 à 24, préférablement de 10 à 20, particulièrement préférablement de 12 à 18.

**12.** Procédé selon l'une quelconque des revendications 1 à 11, du 2,4-TDI et/ou du 2,6-TDI étant utilisés en tant que composant de type isocyanate dans le composant D.

**13.** Mousses de polyuréthane pouvant être obtenues par un procédé selon l'une quelconque des revendications 1 à 12.

**14.** Mousses de polyuréthane selon la revendication 13, qui sont des mousses de polyuréthane souples.

**15.** Utilisation des mousses de polyuréthane selon la revendication 13 ou 14 pour la préparation de rembourrages de meubles, de carcasses textiles, de matelas, de sièges automobiles, d'appuis-tête, d'accoudoirs, de mousses, de feuilles de mousse pour une utilisation dans des pièces d'automobile comme par exemple des habillages de plafond, des parements latéraux de portes, des couvre-sièges et des composants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130760 A1
- EP 0222453 A
- EP 2016079817 A
- EP 1359177 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0176013 A
- EP 0000389 A
- EP 0007502 A
- EP 355000 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Kunststoff-Handbuch. Carl-Hanser-Verlag, 1993, vol. VII, 104-127
- **VON W. SIEFKEN.** *Justus Liebigs Annalen der Chemie,* vol. 562, 75-136
- Kunststoff-Handbuch. Carl-Hanser-Verlag, 1993, vol. VII, 139-265